# EUROPEAN PATENT SPECIFICATION

(11) **EP 2 230 972 B1**
(45) Date of publication and mention of the grant of the patent: **07.09.2011**
(21) Application number: 08720175.2
(22) Date of filing: 03.01.2008
(51) Int. Cl.: A47J 31/06

(54) **APPARATUS FOR PRODUCING A BEVERAGE**
GETRÄNKEZUBEREITUNGSVORRICHTUNG
APPAREIL DE PRODUCTION DE BOISSON

(43) Date of publication of application: 29.09.2010
(73) Proprietor: BABAS S.R.L., 40012 Calderara di Reno (BO) (IT)
(72) Inventor: NANI, Roberto, 24020 Ranica (BG) (IT)
(74) Representative: Rapisardi, Mariacristina
(86) International application number: PCT/IT2008/000005
(87) International publication number: WO 2009/084061

(56) References cited:
- DE-A1-102006 004 329

## Description

The present invention refers to an apparatus for producing aromatic beverages.

Automatic or semi-automatic machines have been present on the market for a long time and generate a forced passage of water through a capsule containing an aromatic essence that is soluble, insoluble or partially soluble.

With such machines, it is possible to prepare hot or cold beverages and infusions, for example based on coffee, tea, vegetable soups, thirst-removing beverages, energisers, etc.

The capsule has a way for inserting water and a way for outputting the beverage that is produced by infusing and/or dissolving the aromatic essence when water passes.

During use, the capsule outputting way is hydraulically connected to a dispenser adapted to convey the thereby produced beverage towards a delivering point outside the machine.

There is the risk that the produced beverage is contaminated by residuals deriving from a previous operating cycle of the machine in which a beverage of a different type had been produced, this being able to imply a modification and even a worsening of the organoleptic properties of the beverage produced last.

In fact, the dispenser has a single conveying way common to all beverages that are produced every time.

DE 10 2006 004329 discloses an apparatus for producing a beverage according to preamble of claim 1.

The technical scope of the present invention is therefore realising an apparatus for producing aromatic beverages that allows removing the technical inconveniences mentioned in the prior art.

Within this scope, an object of the invention is realising an apparatus that is suitable to produce different types of beverages at the same time preserving, unchanged and at optimum levels, the organoleptic properties of the different produced beverages.

Another object of the present invention is providing an apparatus for producing aromatic beverages that has no risks that a beverage is contaminated with residuals deriving from the previous preparation of a beverage of a different type.

Another object of the present invention is realising an apparatus for producing aromatic beverages that can be operated with water-soluble aromatic essences and/or infusion aromatic essences.

The above and other objects according to the present invention are obtained by an apparatus for producing aromatic beverages according to claim 1.

Other features of the present invention are further defined in the dependent claims.

Further characteristics and advantages of the invention will be better pointed out by the description of a preferred, but not exclusive embodiment of the apparatus for producing aromatic beverages according to the invention, shown as a nonlimiting example in the enclosed drawings, in which:

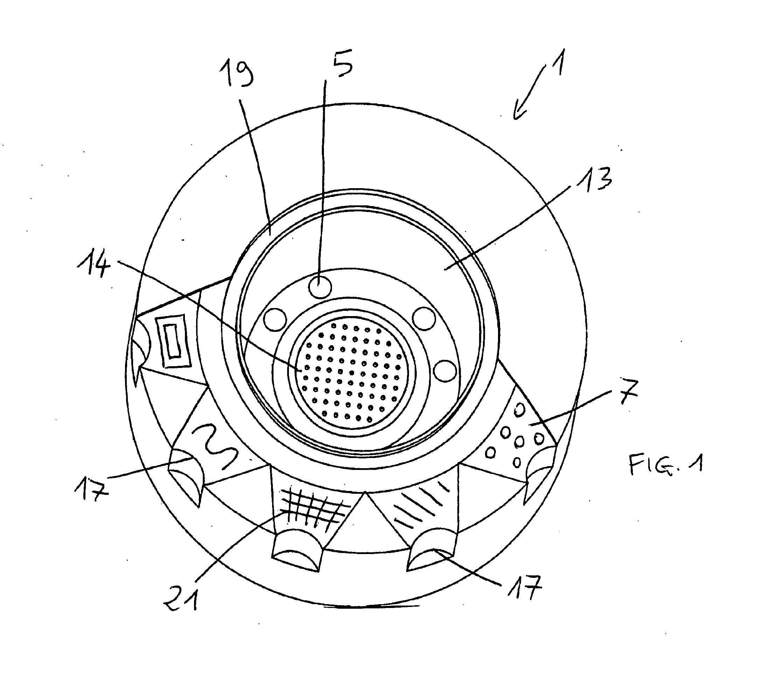

Figure 1 shows a perspective view of the dispenser of the apparatus of the present invention;
Figure 2 shows an exploded perspective view of a first type of capsule complying with the present invention;
Figure 3 shoes a top plan view of the capsule of figure 2;
Figure 4 shows an exploded perspective view of a second type of capsule complying with the present invention; and
Figure 5 shows a top plan view of the capsule of figure 4.

With reference to the above figures, an apparatus is shown for producing aromatic beverages comprising a dispenser 1 and a capsule 2.

The capsule 2 can be a plurality of types that are different at least for the type of aromatic essence contained therein.

The capsule 2 in particular can contain a partially or wholly water-soluble, or insoluble aromatic essence, so that the beverage is produced by dissolving and/or infusing the aromatic essence in the water that crosses the capsule 2.

The aromatic essence can be based on coffee, tea, fruit juice extract, vegetable soup extract, etc.

The structure of the capsule 2 can also be related with the type of beverage to be produced.

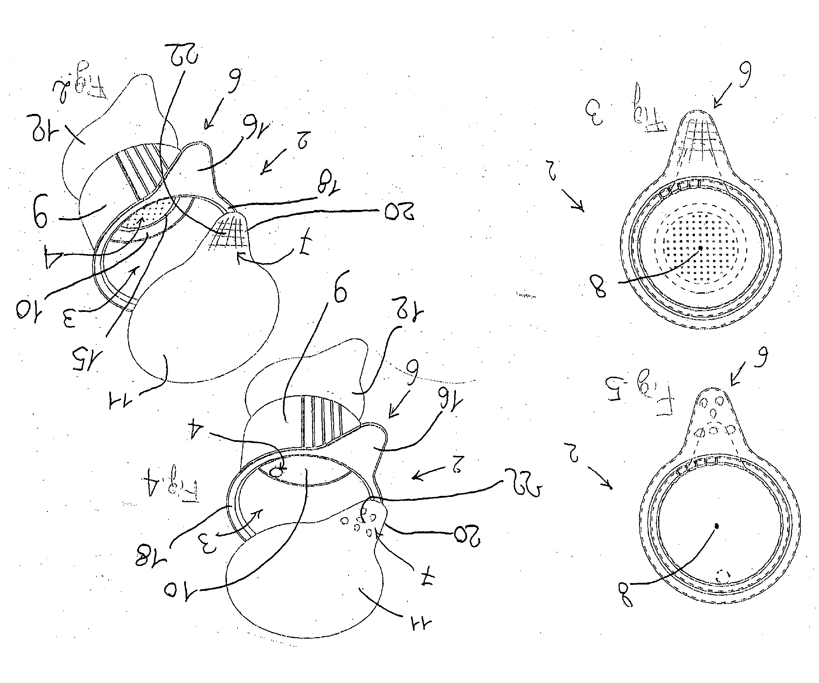

Preferably, the structure of the capsule 2 shown in figures 2 and 3 is used for beverages whose preparation requires pressurised water, typically coffee-based beverages, and is different from the structure of the capsule 2 of figures 4 and 5, that on the contrary is used for beverages whose preparation does not require pressurised water, typically beverages based on vegetable soup and the like.

In the following description, the equivalent parts of the capsule 2 of the embodiment shown in figures 2 and 3 on one hand and the embodiment shown in figures 3 and 4 on the other hand will be designated with the same reference number.

The capsule 2 has available a way 3 for inserting water and a way 4 for outputting the beverage produced when water passes through the capsule 2.

The dispenser 1, whose function is conveying the beverage towards a delivering point, has a plurality of conveying ways 5 that can be selectively coupled with the outputting way 4 of the capsule 2.

The apparatus for producing aromatic beverages further has means 6 for the angular positioning of the capsule 2 with respect to the dispenser 1 compulsorily in one among a plurality of angular positions, each one corresponding to the selection of a conveying way 5.

The apparatus for producing aromatic beverages finally provides for means 7 for relating each angular position in which the capsule 2 is arranged with the type of capsule 2 itself.

The capsule 2 has a central axis 8 for rotating onto itself in order to obtain the various angular positions with respect to the dispenser 1.

The capsule 2 in particular has a side wall 9 that is developed all around the central axis 8, a bottom base closed by a small cover 10 in which the outputting way 4 is obtained, and a top base closed by a tongue 11 that can be perforated.

A second protecting tongue 12 is applied to the external side of the small cover 10 whose internal side is internally coated with a filtering paper (not shown).

The tongues 11 and 12 are made of aluminium while the side wall 9 and the small cover 10 are made of plastic material (for example a three-layer PP-EWH-PP, where PP is polypropylene) suitable to create, together with the tongues 11 and 12, a barrier to external atmospheric agents, air, light, etc. that could change the characteristics of the aromatic essence.

Obviously, it is conceivable that the capsule 2 is different from the one shown, both as regards materials, and as regards its structure.

As an example, it is conceivable that the top base of the capsule 2, instead of the tongue 11 that can be perforated, is closed by a filtering paper in turn covered with a removable protecting tongue. In this case, the removable protecting tongue and the filtering paper are joined only on their perimeters, as well as the protecting tongue 12 and the small cover 10.

the dispenser 1 has an imprint 13 that matches the capsule 2 for its inserting in a coaxial direction with the rotation axis 8: in particular, capsule 2 and imprint 13 are substantially complementary frustums of cone.

The bottom of the imprint 13, where the small cover 10 of the capsule 2 is abutted, has a first central conveying way 5, and one or more second peripheral conveying ways 5 arranged as a corollary of the first central conveying way 5.

In the embodiment of the capsule of figures 2 and 3, the outputting way 4 is composed of a plurality of calibrated holes arranged on a central area of the small cover 10 in order to be able to be overlapped to the first central conveying way 5 when the capsule 2 is housed in the imprint 13.

In the embodiment of the capsule of figures 4 and 5, the outputting way 4 is instead composed of a single hole, arranged on the periphery of the small cover 10 in order to be able to be overlapped to any one of the second peripheral conveying ways when the capsule 2 is housed in the imprint 13. More precisely, the first central conveying way 5 is present on a lowering 14 of the imprint 13 bottom at a height that is therefore different from the second peripheral conveying ways 5.

At least in the embodiment shown in figures 2 and 3, the outputting way 4 is placed on a central lifting 15 of the small cover 10, that delimits, with the lowering 14, a collector for the liquid going out of the capsule 2.

The angular positioning means 6 comprise a key 16 that is present in the capsule 2, that can be selectively coupled with one of a plurality of engagement seats 17 being present on the dispenser 1.

The key 16 specifically is a wing that is extended outside the layout of the capsule 2.

The engagement seats 17 are arranged along a circumference that is coaxial with the rotation axis 8 and is external to the imprint 13.

The wing is developed by a collar 18 of the edge of the top base of the capsule 2.

The imprint 13 of the dispenser 1 has on its top a shoulder 19 for abutting the collar 18.

The collar 18 therefore is used both for centring the capsule 2 in the imprint 13, and for joining with the closing tongue 11 that can be perforated (or with the filtering paper of the assembly filtering paper-protecting tongue that can be removed, possibly present as replacement of the closing tongue 11 that can be perforated).

The tongue 11 has a portion 20 of its outline that matches with the key 16 to which it is overlapped.

The means 7 for relating comprise a specific graphic and/or chromatic indication 21 present on each engagement seat 17 and a similar graphic and/or chromatic indication 22 carried by the capsule 2 next to the key 16, in particular on the portion 20 of the tongue 11 that can be perforated.

With reference to the particular embodiment described and shown, the operation of the apparatus is briefly as follows. The user chooses the type of capsule 2 corresponding to the beverage that he wants.

The graphic and/or chromatic indication 22 included on the capsule 2 identifies its contents.

For example, a brown chromatic indication 22 can identify a capsule 2 for preparing a coffee beverage, a yellow chromatic indication 22 can identify a capsule 2 for preparing a tea beverage, etc.

The user removes the protecting tongue 12 and inserts the capsule 2 in the imprint of the dispenser 1, orienting it in order to align the indication 22 being present on the capsule 2 with the analogous indication 21 being present on the dispenser 1.

The assembly (not shown) for inserting water in the capsule 2 is closed, this implying in the particular case the perforation of the tongue 11 by hollow perforating elements (not shown) that must open the inserting way 3 through which water is adduced inside the capsule 2.

The beverage that goes out of the outputting way 4 of the capsule 2 is channelled in the selected conveying way 5 from which it is taken to the external delivering point.

Then, every time a coffee beverage is desired, the user selects the conveying way 5 dedicated to the coffee beverage, and adopts a similar behaviour when he wants a beverage of a different type, for example selecting the conveying way 5 dedicated to the tea beverage every time he wishes to produce a tea beverage with its related capsule 2.

With such procedure, one avoids contaminating a beverage with residuals deriving from previous operating cycles of the apparatus in which a capsule 2 of a different type had been used, since downstream of the capsule 2 there are as many dedicated conveying ways 5 as the types of beverages desired. With the same apparatus it is thereby possible to obtain different types of beverages, always having optimum organoleptic properties.

Obviously, all details can be replaced with technically equivalent elements,

In practice, the materials used, in addition to the sizes, can be any one according to the needs and the state of the art.

## Claims

1. Apparatus for producing a beverage, comprising at least one of a plurality of types of capsules (2) that are different at least by the type of aromatic essence contained therein, said capsule having a way (3) for inserting water and a way (4) for outputting said beverage produced when water passes through said capsule (2) **characterised in that** the apparatus comprises a dispenser (1) adapted to convey said beverage towards a delivering point, said dispenser (1) having a plurality of conveying ways (5) that are adapted to be selectively coupled with said outputting way (4) of said capsule (2), means (6) being further provided for angularly positioning said capsule (2) with respect to said dispenser (1) compulsorily in one among a plurality of angular positions, each position corresponding to a selection of one of said conveying ways (5), and means (7) for relating each one of said angular positions with said type of said capsule (2).

2. Apparatus for producing a beverage according to claim 1, **characterised in that** said capsule (2) has a central rotation axis (8) onto said capsule (2) for obtaining said angular positions.

3. Apparatus for producing a beverage according to claim 1 or 2, **characterised in that** said dispenser (1) has an imprint (13) matching with said capsule (2) for inserting said capsule (2) in a coaxial direction with said rotation axis (8) a first central conveying way (5) and one or more second conveying ways (5) arranged as corollary of said first conveying way (5), said first conveying way (5) and said one or more second conveying ways (5) being arranged on a bottom of said imprint (13) where a small closing cover (10) abuts for a base of said capsule (2) in which said outputting way (4) is obtained.

4. Apparatus for producing a beverage according to claim 1, **characterised in that** said outputting way (4) comprises a plurality of calibrated holes arranged on a central area of said small cover (10) in order to be able to be overlapped onto said first conveying way (5).

5. Apparatus for producing a beverage according to claim 1, **characterised in that** said outputting way (4) comprises a single hole arranged peripherally onto said small cover (10) in order to be able to be overlapped onto any one of said one or more second conveying ways (5).

6. Apparatus for producing a beverage according to claim 1, **characterised in that** said first conveying way (5) is present on a lowering (14) of said bottom of said imprint (13).

7. Apparatus for producing a beverage according to claim 1, **characterised in that** said outputting way (4) comprising said plurality of calibrated holes is present on a lifting (15) of said small cover (10).

8. Apparatus for producing a beverage according to claim 1, **characterised in that** said angular positioning means (6) comprise a key (16) being present on said capsule (2) that is adapted to be selectively coupled with one of a plurality of engagement seat (17) present on said dispenser (1).

9. Apparatus for producing a beverage according to claim 8, **characterised in that** said key (16) is a wing that externally extends to the outline of said capsule (2) and said engagement seats (17) are arranged along a circumference coaxial with said rotation axis (8) and external to said imprint (13).

10. Apparatus for producing a beverage according to claim 9, **characterised in that** said wing is developed from a collar (18) of the top base of said capsule (2).

11. Apparatus for producing a beverage according to claim 10, **characterised in that** said imprint (13) of said dispenser (1) has on its top an abutment shoulder (19) of said collar (18) for centring said capsule (2).

12. Apparatus for producing a beverage according to claim 1, **characterised in that** said means (7) for relating comprise a specific graphic and/or chromatic indication (21), present on each one of said engagement seats (17), adapted to be associated with an analogous graphic and/or chromatic indication (22) present in said capsule (2) next to said key (16).

13. Apparatus for producing a beverage according to claim 1, **characterised in that** said capsule (2) has a plastic body of a nature that is suitable to protect its contents from outside agents, a removable protecting tongue (12) applied on an external side of said small cover (10) whose internal side is covered with filtering paper, and a closing tongue (11) adapted to be perforated for the top base of said capsule (2).

14. Apparatus for producing a beverage according to claim 1, **characterised in that** said capsule (2) has a plastic body of a nature that is suitable to protect its contents from outside agents, a removable protecting tongue (12) applied on an external side of said small cover (10) whose internal side is covered with filtering paper, and a removable closing tongue (11) covering the external side of a further filtering paper applied as closure to the top base of said capsule (2).

15. Apparatus for producing a beverage according to claim 1, **characterised in that** said capsule (2) comprises a first filtering paper applied to the internal side of the bottom base of said capsule (2) and/or a second filtering paper applied to the top base of said capsule (2) below said first tongue (11).

16. Apparatus for producing a beverage according to claim 13, **characterised in that** said tongue (11) adapted to be perforated has a portion (20) of outline matching with said key (16) to which it is overlapped.

## Patentansprüche

1. Vorrichtung zur Erzeugung eines Getränks, umfassend mindestens eine von einer Vielzahl von Typen von Kapseln (2), die sich mindestens durch den Typ der darin aromatischen Essenz unterscheiden, wobei die Kapsel einen Weg (3) zum Einfügen von Wasser und einen Weg (4) zum Ausstoßen des Getränks umfasst, das erzeugt wird, wenn Wasser durch die Kapsel (2) läuft, **dadurch gekennzeichnet, dass** die Vorrichtung eine Ausgabe (1) umfasst, die zum Leiten des Getränks zu einem Abgabepunkt geeignet ist, wobei die Ausgabe (1) eine Vielzahl von Leitungswegen (5) aufweist, die zum ausgewählten Anschließen an den Ausstoßweg (4) der Kapsel (2) geeignet sind, wobei ferner Mittel (6) zur Winkelpositionierung der Kapsel (2) gegenüber der Ausgabe (1) zwangsweise in einer Winkelposition unter einer Vielzahl bereitgestellt sind, wobei jede Position einer Auswahl einer der Leitungswege (5) entspricht, sowie Mittel (7) zum in-Verbindung-Bringen jeder der Winkelpositionen mit dem Typ der Kapsel (2).

2. Vorrichtung zur Erzeugung eines Getränks nach Anspruch 1, **dadurch gekennzeichnet, dass** die Kapsel (2) eine zentrale Drehachse (8) auf der Kapsel (2) zum Erhalt der Winkelpositionen aufweist.

3. Vorrichtung zur Erzeugung eines Getränks nach Anspruch 1 oder 2, **dadurch gekennzeichnet, dass** die Ausgabe (1) eine zu der Kapsel (2) passende Prägung (13) zum Einfügen der Kapsel (2) in einer mit der Drehachse (8) koaxialen Richtung, einen ersten zentralen Leitungsweg (5) und einen oder mehrere zweite Leitungswege (5) aufweist, die den ersten Leitungsweg (5) begleitend angeordnet sind, wobei der erste Leitungsweg (5) und der eine oder die mehreren zweiten Leitungswege (5) auf einem Boden der Prägung (13) angeordnet sind, wo ein kleiner Verschlussdeckel (10) als eine Basis der Kapsel (2) anschlägt, in welcher der Ausstoßweg (4) erhalten ist.

4. Vorrichtung zur Erzeugung eines Getränks nach Anspruch 1, **dadurch gekennzeichnet, dass** der Ausstoßweg (4) eine Vielzahl von kalibrierten Löchern umfasst, die auf einem zentralen Bereich des kleinen Deckels (10) angeordnet sind, um auf den ersten Leitungsweg (5) überlagerbar zu sein.

5. Vorrichtung zur Erzeugung eines Getränks nach Anspruch 1, **dadurch gekennzeichnet, dass** der Ausstoßweg (4) ein einzelnes Loch umfasst, das am Umfang auf dem kleinen Deckel (10) angeordnet ist, um auf einen des einen oder der mehreren zweiten Leitungswege (5) überlagerbar zu sein.

6. Vorrichtung zur Erzeugung eines Getränks nach Anspruch 1, **dadurch gekennzeichnet, dass** der erste Leitungsweg (5) auf einer Absenkung (14) des Bodens der Prägung (13) vorhanden ist.

7. Vorrichtung zur Erzeugung eines Getränks nach Anspruch 1, **dadurch gekennzeichnet, dass** der die Vielzahl von kalibrierten Löchern umfassende Ausstoßweg (4) auf einer Erhöhung (15) des kleinen Deckels (10) vorhanden ist.

8. Vorrichtung zur Erzeugung eines Getränks nach Anspruch 1, **dadurch gekennzeichnet, dass** die Winkelpositioniermittel (6) einen auf der Kapsel (2) vorhandenen Vorsprung (16) umfassen, der zum ausgewählten Anschließen an eine von einer Vielzahl von auf der Ausgabe (1) vorhandenen Eingriffaufnahmen (17) geeignet ist.

9. Vorrichtung zur Erzeugung eines Getränks nach Anspruch 8, **dadurch gekennzeichnet, dass** der Vorsprung (16) ein Flügel ist, der sich außerhalb zum Profil der Kapsel (2) erstreckt und dass die Eingriffaufnahmen (17) entlang einem Umfang koaxial mit der Drehachse (8) und außerhalb der Prägung (13) angeordnet sind.

10. Vorrichtung zur Erzeugung eines Getränks nach Anspruch 9, **dadurch gekennzeichnet, dass** der Flügel aus einem Kragen (18) der oberen Basis der Kapsel (2) ausgebildet ist.

11. Vorrichtung zur Erzeugung eines Getränks nach Anspruch 10, **dadurch gekennzeichnet, dass** die Prägung (13) der Ausgabe (1) an ihrer Spitze eine Anschlagschulter (19) des Kragens (18) zum Zentrieren der Kapsel (2) aufweist.

12. Vorrichtung zur Erzeugung eines Getränks nach Anspruch 1, **dadurch gekennzeichnet, dass** die Mittel (7) zum in-Verbindung-Bringen eine spezielle grafische und/oder farbliche Angabe (21) umfassen, die auf jeder der Eingriffaufnahmen (17) vorhanden ist, die dazu geeignet ist, an eine analoge grafische und/oder farbliche Angabe (22), die in der Kapsel (2) neben dem Vorsprung (16) vorhanden ist, angeschlossen zu werden.

13. Vorrichtung zur Erzeugung eines Getränks nach Anspruch 1, **dadurch gekennzeichnet, dass** die Kapsel (2) einen Kunststoffkörper einer Art aufweist, die für den Schutz ihres Inhalts vor äußeren Ursachen angemessen ist, eine entfernbare Schutzlasche (12), die auf einer Außenseite des kleinen Deckels (10) aufgebracht ist, dessen Innenseite mit Filterpapier bedeckt ist und eine Verschlusslasche (11), die dazu geeignet ist, für die obere Basis der Kapsel (2) perforiert zu werden.

14. Vorrichtung zur Erzeugung eines Getränks nach Anspruch 1, **dadurch gekennzeichnet, dass** die Kapsel (2) einen Kunststoffkörper einer Art aufweist, die für den Schutz ihres Inhalts vor äußeren Ursachen angemessen ist, eine entfernbare Schutzlasche (12), die auf einer Außenseite des kleinen Deckels (10) aufgebracht ist, dessen Innenseite mit Filterpapier bedeckt ist und eine entfernbare Verschlusslasche (11), welche die Außenseite eines weiteren Filterpapiers bedeckt, das als Verschluss auf die obere Basis der Kapsel (2) aufgebracht ist.

15. Vorrichtung zur Erzeugung eines Getränks nach Anspruch 1, **dadurch gekennzeichnet, dass** die Kapsel (2) ein erstes Filterpapier, das auf die Innenseite der unteren Basis der Kapsel (2) aufgebracht ist und/oder ein zweites Filterpapier, das auf die obere Basis der Kapsel (2) unter der ersten Lasche (11) aufgebracht ist, umfasst.

16. Vorrichtung zur Erzeugung eines Getränks nach Anspruch 13, **dadurch gekennzeichnet, dass** die Lasche (11), die dazu geeignet ist, perforiert zu werden, einen Abschnitt (20) eines Profils aufweist, das zum Vorsprung (16) passt, auf den sie überlagert wird.

## Revendications

1. Appareil pour produire une boisson, comprenant au moins l'un d'une pluralité de types de capsules (2) se différenciant au moins par le type d'essence aromatique contenue, ladite capsule présentant une voie (3) pour faire entrer l'eau et une voie (4) pour faire sortir ladite boisson produite quand l'eau traverse ladite capsule (2), **caractérisé en ce que** l'appareil comprend un distributeur (1) adapté pour acheminer ladite boisson vers un point de distribution, ledit distributeur (1) ayant une pluralité de voies d'acheminement (5) adaptées pour s'accoupler de manière sélective à ladite voie de sortie (4) de ladite capsule (2), des moyens (6) étant aussi présents pour réaliser le positionnement angulaire de ladite capsule (2) par rapport audit distributeur (1) obligatoirement dans l'une d'une pluralité de positions angulaires, chaque position correspondant à une sélection de l'une desdites voies d'acheminement (5), et des moyens (7) pour mettre en relation chacune desdites positions angulaires avec ledit type de ladite capsule (2).

2. Appareil pour produire une boisson selon la revendication 1, **caractérisé en ce que** ladite capsule (2) présente un axe de rotation central (8) sur ladite capsule (2) pour atteindre lesdites positions angulaires.

3. Appareil pour produire une boisson selon les revendications 1 ou 2, **caractérisé en ce que** ledit distributeur (1) présente une empreinte (13) correspondant à ladite capsule (2) pour introduire ladite capsule (2) dans une direction coaxiale avec ledit axe de rotation (8), une première voie d'acheminement centrale (5), et une ou plusieurs secondes voies d'acheminement (5) installées en tant que corollaires de ladite première voie d'acheminement (5), ladite première voie d'acheminement (5) et lesdites une ou plusieurs secondes voies d'acheminement (5) étant situées sur une partie inférieure de ladite empreinte (13), où un petit couvercle de fermeture (10) s'appuie pour former une base de ladite capsule (2), dans laquelle se trouve ladite voie de sortie (4).

4. Appareil pour produire une boisson selon la revendication 1, **caractérisé en ce que** ladite voie de sortie (4) comprend une pluralité d'orifices calibrés disposés sur une partie centrale dudit premier couvercle (10) pour pouvoir se placer au-dessus de ladite première voie d'acheminement (5).

5. Appareil pour produire une boisson selon la revendication 1, **caractérisé en ce que** ladite voie de sortie (4) comprend un seul orifice disposé en périphérie sur ledit petit couvercle (10) pour pouvoir se placer au-dessus de l'une quelconque desdites une ou plusieurs secondes voies d'acheminement (5).

6. Appareil pour produire une boisson selon la revendication 1, **caractérisé en ce que** ladite première voie d'acheminement (5) se situe sur un abaissement (14) de ladite partie inférieure de ladite empreinte (13).

7. Appareil pour produire une boisson selon la revendication 1, **caractérisé en ce que** ladite voie de sortie (4) comprenant ladite pluralité d'orifices calibrés se situe sur un relèvement (15) dudit petit couvercle (10).

8. Appareil pour produire une boisson selon la revendication 1, **caractérisé en ce que** lesdits moyens de positionnement angulaire (6) comprennent une clé (16) située sur ladite capsule (2) adaptée pour s'accoupler de manière sélective à l'un d'une pluralité de sièges d'engagement (17) présents sur ledit distributeur (1).

9. Appareil pour produire une boisson selon la revendication 8, **caractérisé en ce que** ladite clé (16) est une ailette qui se développe à l'extérieur du profil de ladite capsule (2), et **en ce que** lesdits sièges d'engagement (17) sont disposés le long d'une circonférence coaxiale avec ledit axe de rotation (8) et à l'extérieur de ladite empreinte (13).

10. Appareil pour produire une boisson selon la revendication 9, **caractérisé en ce que** ladite ailette se développe à partir d'une bague (18) de la base supérieure de ladite capsule (2).

11. Appareil pour produire une boisson selon la revendication 10, **caractérisé en ce que** ladite empreinte (13) dudit distributeur (1) a, sur sa partie supérieure, un épaulement de butée (19) de ladite bague (18) pour centrer ladite capsule (2).

12. Appareil pour produire une boisson selon la revendication 1, **caractérisé en ce que** lesdits moyens (7) pour établir une relation, comprennent une indication graphique et/ou chromatique spécifique (21), présente sur chacun desdits sièges d'engagement (17), adaptée pour être associée à une indication graphique et/ou chromatique analogue (22) présente sur ladite capsule (2), près de ladite clé (16).

13. Appareil pour produire une boisson selon la revendication 1, **caractérisé en ce que** ladite capsule (2) présente un corps en plastique capable de protéger son contenu contre les agents extérieurs, une languette de protection amovible (12) appliquée sur un côté extérieur dudit petit couvercle (10), dont le côté intérieur est couvert de papier filtrant, et une languette de fermeture (11) adaptée pour être perforée pour la base supérieure de ladite capsule (2).

14. Appareil pour produire une boisson selon la revendication 1, **caractérisé en ce que** ladite capsule (2) présente un corps en plastique capable de protéger son contenu contre les agents extérieurs, une languette de protection amovible (12) appliquée sur un côté extérieur dudit petit couvercle (10), dont le côté intérieur est couvert de papier filtrant, et une languette de fermeture amovible (11) couvrant le côté extérieur d'un autre papier filtrant posé pour fermer la base supérieure de ladite capsule (2).

15. Appareil pour produire une boisson selon la revendication 1, **caractérisé en ce que** ladite capsule (2) comprend un premier papier filtrant appliqué sur le côté intérieur de la base inférieure de ladite capsule (2) et/ou un second papier filtrant appliqué sur la base supérieure de ladite capsule (2), sous ladite première languette (11).

16. Appareil pour produire une boisson selon la revendication 13, **caractérisé en ce que** ladite languette (11) adaptée pour être perforée, présente une portion (20) de profil correspondant à ladite clé (16) sur laquelle elle est posée.
